# EUROPÄISCHE PATENTSCHRIFT

(11) **EP 1 090 812 B1**
(45) Veröffentlichungstag und Bekanntmachung des Hinweises auf die Patenterteilung: **28.04.2004**
(21) Anmeldenummer: 00119737.5
(22) Anmeldetag: 09.09.2000
(51) Int. Cl.: B60R 13/02, B60R 13/01, F16B 5/02

(54) **Befestigungselement zur Befestigung von Verkleidungsplatten an Fahrzeuginnenwänden**
Fastening element for fastening cladding plates on vehicle inner walls
Elément de fixation pour la fixation de plaques de revêtement sur des parois internes d'un véhicule

(30) Priorität: 07.10.1999 DE 29917696 U
(43) Veröffentlichungstag der Anmeldung: 11.04.2001
(73) Patentinhaber: fischerwerke Artur Fischer GmbH & Co. KG, 72178 Waldachtal (DE); SORTIMO International GmbH, 86441 Zusmarshausen (DE)
(72) Erfinder: Kaupp, Jochen, 72178 Waldachtal (DE); Diepold, Stefan, 86150 Augsburg (DE)

(56) Entgegenhaltungen:
- EP-A- 0 469 714
- EP-A- 0 675 295
- DE-C- 19 652 874
- FR-A- 2 670 253

## Beschreibung

Die Erfindung betrifft ein Befestigungselement bestehend aus einer Spannhülse aus Kunststoff und einer selbstschneidenden Blechschraube gemäß dem Oberbegriff des Anspruches 1. Solche Befestigungselemente sind allgemein bekannt, siehe, nur zum Beispiel, Dokument DE-C-19652874 oder EP-A-0 675 295.

Bei der Ausstattung von Fahrzeugen beispielsweise als Transport- oder Werkstattwagen werden die Fahrzeuginnenwände üblicherweise mit aus Kunststoff, Holz oder dergleichen bestehenden Platten ausgekleidet. Die Befestigung der Verkleidungsplatten erfolgt üblicherweise mit selbstschneidenden Blechschrauben, die durch entsprechende Befestigungslöcher der Verkleidungsplatten hindurch in die zur Auflage der Verkleidungsplatten dienenden und an den Fahrzeuginnenwänden angebrachten Holme eingeschraubt werden. Durch die direkte Verschraubung der Verkleidungsplatten mit den Holmen kommt es allerdings zu Verspannungen zwischen der Verkleidungsplatte und der Fahrzeugwand, die zu Beschädigungen und/oder lösen der Platten durch Ausreißen an den Befestigungspunkten führt. Die Verspannungen entstehen durch Verschiebungen zwischen den Verkleidungsplatten und den Fahrzeuginnenwänden, die durch Verformungen der Fahrzeugwände bei Belastung oder unterschiedliche Wärmedehnungen verursacht werden.

Der Erfindung liegt die Aufgabe zu Grunde, ein Befestigungselement zur Befestigung von Verkleidungsplatten an Fahrzeuginnenwänden zu schaffen, das in der Lage ist, Verschiebungen auszugleichen und damit eine Beschädigung der Verkleidungsplatten zu vermeiden.

Diese Aufgabe wird erfindungsgemäß durch die Merkmale des Anspruchs 1 gelöst. Das erfindungsgemäße Befestigungselement besteht aus einer aus Kunststoff hergestellten Spannhülse mit einem Spannflansch und einem Zentrierabschnitt, an dem vorzugsweise drei radial abstehende Längsstege angeordnet sind. Durch über einen Teil ihrer Länge sich erstreckende schlitzförmige Aussparungen im Zentrierabschnitt verbleibt nur eine kurze Anbindung im Fußbereich der Längsstege. Die freistehenden und damit federnd ausgebildeten Längsstege können nunmehr bei Verschiebungen der Verkleidungsplatten ausweichen, sodass keine Verspannungen der Platten mehr entstehen. Damit sind Beschädigungen oder ein Ausreißen der Platten im Bereich der Befestigungspunkte vermieden. '

Es ist zweckmäßig, die lichte Weite der Aussparungen etwas größer auszuführen als die Dicke der Längsstege. Damit können die Längsstege zusätzlich noch in die Aussparungen ausweichen und damit noch größere Verschiebungen der Verkleidungsplatten ausgleichen. Bei einem radialen Überstand der Längsstege entsprechend der Wandungsdicke des Zentrierabschnittes sind die schlitzförmigen Aussparungen in der Lage, die gesamte Höhe des Längssteges aufzunehmen. Dadurch ergibt sich ein Höchstmaß an Ausgleichsmöglichkeit.

In einer weiteren Ausgestaltung der Erfindung können die Längsstege an ihrer vorderen Stirnfläche eine Anlaufschräge aufweisen. Diese Anlaufschräge erleichtert einerseits das Einführen der Spannhülse in das Durchgangsloch der Verkleidungsplatte und verhindert ein Anecken der vorderen Stimkante des Längsstegs an der Wandung des Durchgangsloches beim Einschwenken des Längsstegs in die Aussparung.

Zur Erzielung eines elastischen und die Verschiebung ermöglichenden Anpressdrucks ist es vorteilhaft, den Spannflansch der Spannhülse tellerfederartig nach außen gewölbt auszuführen.

Die Erfindung wird nachfolgend anhand eines in der Zeichnung dargestellten Ausführungsbeispiels näher erläutert.

Es zeigen:
- Figur 1: die Befestigung einer Verkleidungsplatte an einer Fahrzeuginnenwand mit dem erfindungsgemäßen Befestigungselement
- Figur 2: die Spannhülse in Draufsicht

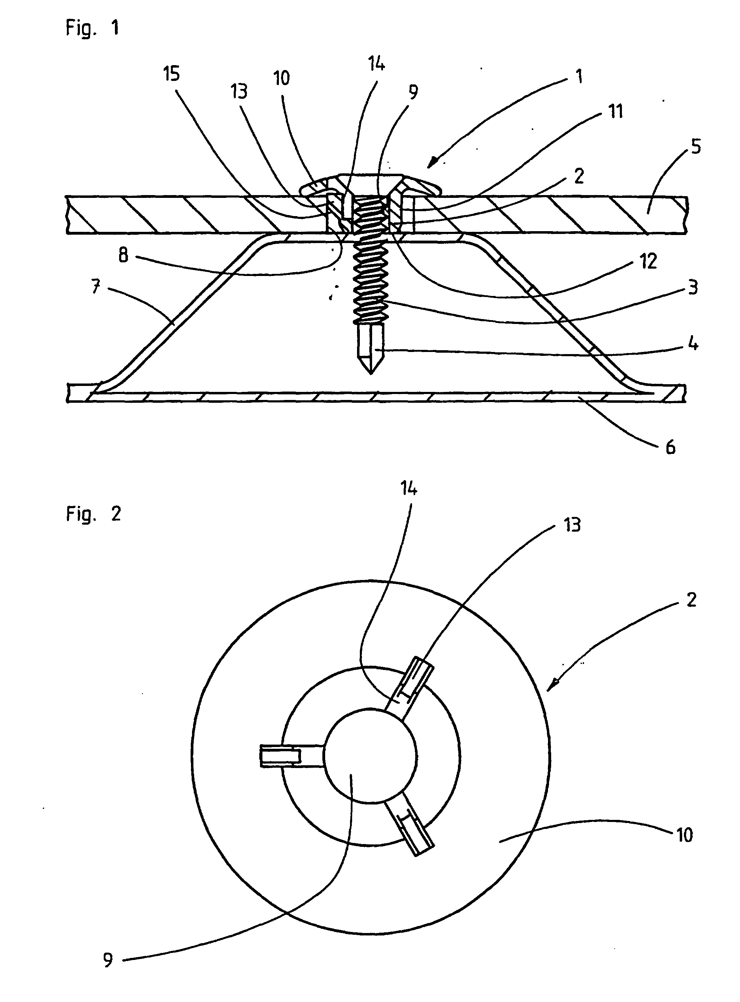

Das in Figur 1 dargestellte Befestigungselement 1 besteht aus einer aus Kunststoff hergestellten Spannhülse 2 und einer selbstschneidenden Blechschraube 3 mit einer Bohrspitze 4. Zur Befestigung der Verkleidungsplatte 5 an den aus Blech bestehenden und an die Fahrzeuginnenwand 6 angehefteten Holm 7 wird die Spannhülse 2 in das Befestigungsloch 8 der Verkleidungsplatte 5 eingesetzt und danach die Blechschraube 3 durch die Bohrung 9 der Spannhülse 2 in den Holm 7 eingeschraubt. Über den tellerfederartig nach außen gewölbten Spannflansch 10 der Spannhülse 2 wird die Verkleidungsplatte 5 elastisch gegen den Holm 7 verspannt, wobei sich der Zentrierabschnitt 11 mit seiner Stirnfläche 12 an der Außenfläche des Holms 7 abstützt.

Die Zentrierung der Spannhülse 2 im Befestigungsloch 8 der Verkleidungsplatte 5 erfolgt über drei Längsstege 13, die radial den Zentrierabschnitt 11 überragen. Über schlitzförmige Aussparungen 14, die sich über einen Teil der Länge der Längsstege 13 erstrecken, sind diese freistehend und damit federnd ausgebildet. Die Längsstege 13 sind somit in der Lage, Verschiebungen zwischen der Verkleidungsplatte 5 und der Fahrzeuginnenwand 6 auszugleichen.

Aus der Draufsicht der Spannhülse 2 in Figur 2 ist erkennbar, dass die lichte Weite der Aussparungen 14 größer ist als die Dicke der Längsstege 13. Damit können die Längsstege 13 bei größeren Verschiebungen in diese Aussparungen 14 ausweichen. Da der radiale Überstand der Längsstege 13 etwa gleich der Wandungsdicke des Zentrierabschnitts 11 ist, können die Längsstege 13 vollständig bei einer entsprechend großen Verschiebung in die Aussparungen 14 ausweichen, sodass die Außenfläche des Zentrierabschnitts 11 an der Wandung des Befestigungsloches 8 in der Verkleidungsplatte 5 zur Anlage kommt.

Um das Einführen der Spannhülse 2 in das Befestigungsloch 8 zu erleichtern sind die Längsstege 13 an ihrer vorderen Stirnfläche mit einer Anlaufschräge 15 versehen. Durch diese Anlaufschräge wird außerdem vermieden, dass beim Einschwenken der Längsstege 13 die vordere Stirnkante an der Wandung des Befestigungsloches 8 aneckt.

## Patentansprüche

1. Befestigungselement (1) bestehend aus einer Spannhülse (2) aus Kunststoff und einer selbstschneidenden Blechschraube (3) zur Befestigung von Verkleidungsplatten (5) an Fahrzeuginnenwänden (6), **dadurch gekennzeichnet, dass** die Spannhülse (2) einen Spannflansch (10) und einen in eine Bohrung (8) der Verkleidungsplatte (5) eingreifenden Zentrierabschnitt (11) mit mehreren radial abstehenden Längsstegen (13) aufweist, wobei die Längsstege (13) durch über einen Teil ihrer Länge sich erstreckende schlitzförmige Aussparungen (14) federnd ausgebildet sind.

2. Befestigungselement nach Anspruch 1, **dadurch gekennzeichnet, dass** die lichte Weite der Aussparungen (14) größer ist als die Dicke der Längsstege (13).

3. Befestigungselement nach Anspruch 1, **dadurch gekennzeichnet, dass** die Längsstege (13) an ihrer vorderen Stirnfläche eine Anlaufschräge (15) aufweisen.

4. Befestigungselement nach Anspruch 1, **dadurch gekennzeichnet, dass** der radiale Überstand der Längsstege (13) etwa gleich der Wandungsdicke des Zentrierabschnitts (11) ist.

5. Befestigungselement nach Anspruch 1, **dadurch gekennzeichnet, dass** der Spannflansch (10) der Spannhülse (2) tellerfederartig nach außen gewölbt ist.

## Claims

1. Fixing element (1) consisting of a clamping sleeve (2) of plastics material and a self-tapping screw (3) for sheet metal for fixing lining panels (5) to vehicle inner walls (6), **characterised in that** the clamping sleeve (2) comprises a clamping flange (10) and a centring portion (11) having several radially projecting elongate members (13) that engages in a bore (8) in the lining panel (5), the elongate members (13) being of resilient construction by virtue of slot-form recesses (14) extending over part of their length.

2. Fixing element according to claim 1, **characterised in that** the inside width of the recesses (14) is larger than the thickness of the elongate members (13).

3. Fixing element according to claim 1, **characterised in that** the elongate members (13) have a sloping face (15) on their leading front face.

4. Fixing element according to claim 1, **characterised in that** the radial projection of the elongate members (13) is approximately the same as the wall thickness of the centring portion (11).

5. Fixing element according to claim 1, **characterised in that** the clamping flange (10) of the clamping sleeve (2) is outwardly curved in the manner of a saucer spring.

## Revendications

1. Elément de fixation (1) composé d'un manchon (2) en matière plastique et d'une vis à tôle auto-taraudeuse (3) pour la fixation de plaques de revêtement (5) sur les parois intérieures d'un véhicule (6), **caractérisé en ce que** le manchon (2) comporte une flasque (10) et un tronçon de centrage (11) s'accrochant dans un alésage (8) de la plaque de revêtement (5) avec plusieurs brides longitudinales (13) reposant de manière radiale, sachant que les brides longitudinales (13) sont configurées de manière élastique à travers des évidements (14) en forme de fentes s'étirant sur une partie de leur longueur.

2. Elément de fixation selon la revendication 1, **caractérisé en ce que** le diamètre intérieur des évidements (14) est supérieur à l'épaisseur des brides longitudinales (13).

3. Elément de fixation selon la revendication 1, **caractérisé en ce que** les brides longitudinales (13) comportent une diagonale de démarrage (15) sur leur surface extérieure avant.

4. Elément de fixation selon la revendication 1, **caractérisé en ce que** le porte-à-faux radial de la bride longitudinale (13) est presque identique à l'épaisseur de la paroi du tronçon de centrage (11).

5. Elément de fixation selon la revendication 1, **caractérisé en ce que** la flasque (10) du manchon (2) est bombée vers l'extérieur à la manière d'une rondelle à ressort.
